# EUROPÄISCHE PATENTSCHRIFT

(11) **EP 1 973 743 B1**
(45) Veröffentlichungstag und Bekanntmachung des Hinweises auf die Patenterteilung: **05.05.2010**
(21) Anmeldenummer: 07711332.2
(22) Anmeldetag: 11.01.2007
(51) Int. Cl.: B41J 2/175

(54) **VERFAHREN, FLÜSSIGKEITSVERSORGUNGSEINHEIT UND MESSVORRICHTUNG FÜR EINE FÜLLSTANDSANZEIGE**
METHOD, FLUID SUPPLY UNIT AND MEASURING DEVICE FOR A LEVEL INDICATOR
PROCÉDÉ, UNITÉ D'ALIMENTATION EN LIQUIDE ET DISPOSITIF DE MESURE POUR INDICATEUR DE NIVEAU

(30) Priorität: 20.01.2006 DE 102006003054
(43) Veröffentlichungstag der Anmeldung: 01.10.2008
(73) Patentinhaber: Phoenix Contact GmbH & Co. KG, 32825 Blomberg (DE)
(72) Erfinder: FÜTTERER, Harald, 78166 Donaueschingen (DE); STELLMACH, Dieter, 78073 Bad Dürrheim (DE)
(74) Vertreter: Herden, Andreas F.
(86) Internationale Anmeldenummer: PCT/EP2007/000205
(87) Internationale Veröffentlichungsnummer: WO 2007/087971

(56) Entgegenhaltungen:
- EP-A- 1 053 875
- EP-A- 1 382 449
- EP-A- 1 462 263
- DE-A1- 19 935 673
- FR-A- 2 765 330
- FR-A- 2 827 215
- US-A- 4 432 005
- US-A- 4 604 633
- US-A- 4 973 993
- US-A1- 2006 012 659
- US-B1- 6 474 156

## Beschreibung

Die vorliegende Erfindung bezieht sich allgemein auf das Gebiet der Druckmaschinen und betrifft insbesondere gemäß den Merkmalen des Oberbegriffs des Anspruchs 1 ein Verfahren und gemäß den Merkmalen des Oberbegriffs des Anspruchs 5 eine Flüssigkeitsversorgungseinheit umfassend eine Messvorrichtung für einen Tintendrucker zur Anzeige eines Füllstandes.

Tintendrucker sind gekennzeichnet durch selektives Aufbringen von Flüssigkeit, insbesondere eines Tintenstrahls auf ein Aufzeichnungsmaterial, wobei der Tintendrucker ein Matrixdrucker ist, bei dem durch einen gezielten Abschuss bzw. dem Ablenken kleiner Tintentröpfchen die Erzeugung eines Bildes auf einer Oberfläche von Tintentröpfchen entsteht. Zum Aufbringen der Flüssigkeit für ein Schrift- oder Druckbild ist eine

Flüssigkeitsversorgungseinheit notwendig. Die Flüssigkeitsversorgungseinheit besteht im Prinzip aus einem Flüssigkeitsdrucksystem, welches mittels einer Fluidvorrichtung eine Flüssigkeit aus einem Vorratsbehälter einer Druckvorrichtung zuführt, wobei die Druckvorrichtung zusätzlich mit einem Reservoir für die Flüssigkeit ausgestattet sein kann. Die Druckvorrichtung einer Flüssigkeitsversorgungseinheit verlangt zur einwandfreien Funktion eine ausreichende Füllung des Reservoirs mit Flüssigkeit. Zur Feststellung und Aufrechterhaltung dieser Voraussetzungen erfolgt eine Überwachung der Flüssigkeitsmenge in der Flüssigkeitsversorgungseinheit durch Messen eines Flüssigkeitsstandes mit Folgesteuerung. Als Folgeeinrichtung werden alle Vorrichtungen verstanden, mit denen Messwerte bzw. Mess-Signale unmittelbar oder mittelbar verarbeitet werden. Dies kann bspw. ein Mikroprozessor sein.

Aus dem Stand der Technik sind verschiedene Messvorrichtungen bzw. Verfahren zur Feststellung von Flüssigkeitszuständen in einer Flüssigkeitsversorgungseinheit bekannt. Zur Messung von Flüssigkeitszuständen werden Sensoren eingesetzt, wobei der Sensor die Messgröße erfasst und die Elektronik der Messvorrichtung die Werte verarbeitet. Bekannte Sensoren in Stabausführung zur kontinuierlichen Füllstandsmessung in Flüssigkeiten zum Einsatz in kleinen Behältern für aggressive Medien sind hinreichend bekannt. Diese haben den Nachteil, dass sie groß im Volumen sind und eine zusätzliche externe Auswerteelektronik benötigen. Weitere Nachteile entstehen durch den relativ großen Abstand zwischen dem Sensorelement und der externen Auswerteelektronik. Zur Überbrückung des Abstandes sind Leitungen erforderlich, die das Bauvolumen und die Störanfälligkeit durch variable Übergangswiderstände und durch elektromagnetische Strahlung nachteilig erhöhen.

Die EP 0 778 141 B1 beschreibt eine Vorrichtung zum Erfassen des Tintenleerstandes für Tintenstrahldrucker. Mit der Vorrichtung wird eine Überwachung des Tintenpegels in der Tintenversorgung vorgenommen, um zu erfassen, wann die Tintenversorgung nahezu entleert ist.

Das Messverfahren zur Feststellung der Tintenversorgung bzw. des Tintenvorrates im Tintenreservoir beruht auf einem optischen Detektor, der ein Betätigungsglied überwacht, welches mit einer aufwendigen Mechanik verbunden ist. Nachteilig wirkt sich aus, dass nicht direkt das Füllstandsniveau gemessen wird, sondern ein Tintenleerstandssignal, welches aufgrund einer vorbestimmten Zeit, während sich die Kammer einer Pumpe nicht ausgedehnt hat, ermittelt wird.

In der EP 0 784 784 B1 ist eine Messvorrichtung mit einem Flüssigkeitsstandmesser für Tintenstrahldrucker offenbart, der aus einer Vielzahl elektrisch leitender Stangen verschiedener Längen besteht, die das Flüssigkeitsniveau in einer separaten Kammer eines Behälters messen, um mit der darin enthaltenen flüssigen Tinte in Kontakt zu treten. Die Stangen sind mit einem Impedanznetzwerk verbunden, das eine Serie von Ausgangssignalen schafft, die das Tintenniveau innerhalb der abgeschirmten Kammer darstellen. Der Nachteil dieses Messverfahrens besteht in der Baugröße des Sensors und das keine kontaktlose Messung zwischen dem Sensor und dem Medium stattfindet und ein kontinuierlicher Füllstand nicht ermittelt werden kann.

In der Schrift US 2003/0128256 ist ein Tintenstrahldrucker beschrieben, welcher eine erste Tintenkammer mit einem "kapillaren Bauteil" aufweist. Diese erste Tintenkammer ist innerhalb einer zweiten Tintenkammer angeordnet. Die zweite Kammer ist über ein unteres Schlitzventil mittels einer "Tintenauffüllstation" mit einem Haupttank verbunden. Zusätzlich ist die zweite Tintenkammer über ein oberes Schlitzventil mittels der "Tintenauffüllstation" mit einem Auslassschlauch und einer angeschlossenen Pumpe verbunden. An der Auslassöffnung sind der Auslassschlauch und die Pumpe angeschlossen. Mittels der Pumpe wird ein Unterdruck in der zweiten Tintenkammer erzeugt und dadurch die Tinte aus dem Haupttank in die zweite Tintenkammer transportiert bzw. gesaugt. Die Messvorrichtung wird folgendermaßen gebildet: Ein Hochstand und ein Tiefstand der Tinte in der zweiten Kammer werden mittels eines oberen Prismas und eines unteren Prismas sowie den Prismen zugeordneter optischer Sensoren ermittelt. Dass Messprinzip basiert auf dem Prinzip der totalen Reflexion.

Aus der EP 0 968 831 B1 ist ein kontaktloser Pegeldetektor bekannt, der sich in einem Rückgewinnungs-Vorratsbehälter befindet. Dieser Pegeldetektor arbeitet als Füllstandsanzeiger und ist vom kapazitiven oder Halleffekt-Typ, wobei die kontaktlose Messung durch die Wand des Rückgewinnungs- Vorratsbehälters hindurch vorgenommen wird. Die Messung erfolgt, um ein Überlaufen des Vorratsbehälters zu vermeiden und folglich das Volumen der in dem Vorratsbehälter enthaltenen Tinte zu erfassen. Nachteil dieses Tintenkreises ist die voluminöse Baugröße des doppelseitigen Tragblockes, wodurch ein Einsatz bei den in Frage stehenden Druckmaschinen, insbesondere den handelsüblichen Tintendruckern, nicht möglich ist. Der Pegeldetektor wird nur, um die Betriebsstörung des. Überlaufens des Vorratsbehälters zu vermeiden, zur Kontrolle eingesetzt.

Der Erfindung liegt daher die Aufgabe zugrunde, ein

Verfahren und eine Flüssigkeitsversorgungseinheit der eingangs genannten Art zu schaffen, welche die vorgenannten Nachteile der bekannten Anordnungen vermeidet und es ermöglicht, eine für den Massenartikel besonders kostengünstige, mit einfacher Funktionsgeometrie und geringer Baugröße ausgestattete Messvorrichtung herzustellen.

Diese Aufgabe wird durch ein Verfahren und eine Flüssigkeitsversorgungseinheit mit den Merkmalen der Patentansprüche 1 und 5 gelöst. Vorteilhafte Ausgestaltungen und Weiterbildungen der Erfindung ergeben sich aus den nachfolgenden Unteransprüchen.

Die Erfindung wird beschrieben durch ein Verfahren für eine Druckmaschine mit Druckvorrichtung zum Aufbringen von Flüssigkeit auf ein Aufzeichnungsmaterial, mit Überwachung der Flüssigkeitsmenge in einer Flüssigkeitsversorgungseinheit durch Messen des Flüssigkeitsstandes mit Folgesteuerung. Das Verfahren ist gekennzeichnet durch
Bereitstellen der Druckvorrichtung mit einem Gehäuse, welches eine Zulauföffnung für die Flüssigkeit und eine Auslassöffnung für die Flüssigkeit aufweist und ein Reservoir für die Flüssigkeit und einen Druckkopf umfasst,
Anschließen eines Vorratsbehälters für die Flüssigkeit an der Zulauföffnung und einer Messvorrichtung mit einer Kammer an der Auslassöffnung und
Messen des Flüssigkeitsstandes durch die Messvorrichtung, die das Vorhandensein von Flüssigkeit am Ausgang der Druckvorrichtung detektiert, indem ein Flüssigkeitsniveau in der Kammer der Messvorrichtung erfasst wird.

Weiterhin wird die Erfindung beschrieben durch eine Flüssigkeitsversorgungseinheit für eine Druckmaschine mit Druckvorrichtung zum Aufbringen von Flüssigkeit auf ein Aufzeichnungsmaterial, mit Überwachung der Flüssigkeitsmenge in einer Flüssigkeitsversorgungseinheit durch Messen des Flüssigkeitsstandes mit Folgesteuerung. Die Flüssigkeitsversorgungseinheit ist **dadurch gekennzeichnet, dass**
die Druckvorrichtung ein Gehäuse mit einer Zulauföffnung für die Flüssigkeit und einer Auslassöffnung für die Flüssigkeit aufweist und ein Reservoir und einen Druckkopf umfasst und
der Vorratsbehälter mit der Zulauföffnung verbunden ist und
eine Messvorrichtung mit einer Kammer, die mit der Auslassöffnung verbunden ist und
die Messvorrichtung zum Messen eines Füllstandes in der Kammer und zum Steuern einer Fluidvorrichtung geeignet ist.

Um eine mit diesen Merkmalen der vorliegenden Erfindung ausgestattete Flüssigkeitsversorgungseinheit, die Bestandteil einer Druckmaschine ist, mit einer integrierten und in der Baugröße minimierten Messvorrichtung herzustellen, wird erfindungsgemäß vorgeschlagen, dass die Messvorrichtung vorteilhafterweise aus einem Sensor mit integrierter Auswerteelektronik besteht, wobei die Messung des Flüssigkeitszustandes in der Versorgungseinheit durch eine Messvorrichtung erfolgt, die das Vorhandensein einer Flüssigkeit bereits am Ausgang der Druckvorrichtung detektiert. Durch die unmittelbare Nähe der Messvorrichtung an der Druckvorrichtung kann die Baugröße der Flüssigkeitsversorgungseinheit reduziert werden. Die Messvorrichtung umfasst einen Sensor. In einer Version der Erfindung erfolgt das Messverfahren durch einen kapazitiven Sensor. Die Detektion der Flüssigkeit erfolgt durch ein kapazitives Messverfahren, wobei durch das kapazitive Verfahren der Füllstand erfasst und in eine weiterverarbeitbare Bedingung bzw. Information umgewandelt wird. Die Bedingung bzw. Information beruht auf der Änderung des elektrischen Feldes in der Umgebung der aktiven Mess-Zone des Sensors. Entsprechend dieser Änderung erzeugt der Sensor ein Signal, welches der Auswerteelektronik zugeleitet wird. In einer Ausführungsform wird die Bedingung als Signal durch eine am Sensor integrierte Auswerteelektronik erzeugt. Vorzugsweise wird das von der Auswerteelektronik erzeugte Signal einer Gerätesteuerung zugeführt.

Der Sensor besteht im Wesentlichen aus einem RC- Oszillator als Aufnehmer, einem Demodulator und einer Ausgangsstufe. Die Füllstandsänderung der Flüssigkeit in der Kammer der Messvorrichtung, also in der aktiven Mess-Zone des kapazitiven Sensors, bewirkt eine Kapazitätsänderung des Kondensators, wodurch der RC- Oszillator seine SchwingFrequenz ändert. Dieses bewirkt, dass die dem Oszillator nachgeschaltete Triggerstufe kippt und der Schaltverstärker seinen Ausgangszustand ändert. Durch die unmittelbare Nähe der Auswerteelektronik am Sensor werden vagabundierende Kapazitäten und Störungen der Verbindungsleitungen zwischen dem Sensorelement und der Auswerteelektronik ausgeschlossen. Das von der Auswerteelektronik erzeugte Signal bzw. der Signalsprung wird einer Gerätesteuerung zugeführt, die das An- oder Ausschalten einer Fluidvorrichtung, die zwischen dem Vorratsbehälter und der Druckvorrichtung angeordnet ist, vornimmt. Die Fluidvorrichtung sorgt für das Flüssigkeitsniveau in der Flüssigkeitsversorgungseinheit und somit für den Füllstand der Flüssigkeit in der Druck- und Messvorrichtung. Bei der Befüllung der Vorrichtungen wird die Flüssigkeit aus dem Vorratsbehälter mittels der Fluidvorrichtung durch eine Zuleitung in die Druckvorrichtung befördert, dabei strömt die Flüssigkeit in das integrierte Reservoir der Druckvorrichtung und füllt dieses langsam aus. Ist das Reservoir der Druckvorrichtung mit Flüssigkeit gefüllt, steigt das Flüssigkeitsniveau in dem aufwärts weisenden Auslauf bis in die am Auslauf angeordnete Kammer der Messvorrichtung, die auf die Druckvorrichtung montiert ist. Der Sensor der Messvorrichtung detektiert das Vorhandensein von Flüssigkeit im Auslauf und stellt sicher, dass die Druckvorrichtung vollständig mit Flüssigkeit gefüllt ist. Die erfindungsgemäße Messvorrichtung eignet sich somit als Füllstandssensor zur Ermittlung eines Flüssigkeitsniveaus in einer Flüssigkeitsversorgungseinheit, wobei die Flüssigkeit aus einem aus wasser- oder lösungsmittelbasierenden Fluid mit oder ohne Farbpartikel, die wiederum als Lösungen oder Pigmente vorliegen können, bestehen kann.

Damit ist die Messvorrichtung für die kontinuierliche Füllstandsmessung für aggressive Medien auch in anderen Technologiebereichen einsetzbar.

Wie vorstehend ausgeführt, umfasst die Messvorrichtung den Sensor. In einer Version bestehen Teile des Sensors aus einem Leitermaterial, wobei auf dem Leiterplattenmaterial eine Elektrode und/oder eine Auswerteelektronik angeschlossen ist bzw. sind. In einer Ausführungsform enthält der Sensor ein oder mehrere flächige Elemente. Vorzugsweise ist das Element im Wesentlichen als Leiterplattenmaterial mit in Kunststoff eingelassenen Leiterbahnen ausgebildet.

In einer Ausführung ist der Sensor im Wesentlichen aus drei flächigen Elementen gebildet. Insbesondere ist in wenigstens einem Element eine Elektrode aufgenommen. Vorzugsweise ist die Elektrode flächig ausgebildet.

In einer Ausgestaltung ist die Auswerteelektronik zur Spannungsversorgung über mindestens eine Leiterbahn mit einem Anschlussstecker verbunden. Vorzugsweise ist die Auswerteelektronik mit mindestens einer Leiterbahn zur Signalverarbeitung verbunden. In einer Ausführungsform ist die Leiterbahn mindestens zu einem für eine Gerätesteuerung eines Geräts geeigneten Kontaktelement geführt. Eine weitere Ausgestaltung ist **dadurch gekennzeichnet, dass** die Elektrode und die Auswerteelektronik über Kontaktelemente und über Leiterbahnen auf dem Leiterplattenmaterial miteinander verbunden sind.

Erfindungsgemäß liegen die Elemente in Art eines Sandwichs aufeinander, wobei das mittlere Element durch einen ausgenommenen Bereich die Kammer bildet. In einer weiteren Ausführungsform ist die Messvorrichtung **dadurch gekennzeichnet, dass** das mittlere Element mit Verbindungs- und/oder Positionierelementen für die äußeren Elemente ausgestattet ist. In einer Ausgestaltung ist das äußere Element zweiseitig und das andere äußere Element einseitig kaschiert.

Ein Ausführungsbeispiel der Erfindung ist in den Zeichnungen rein schematisch dargestellt und wird nachfolgend näher beschrieben.

Es zeigt:
Figur 1 prinzipiell eine Flüssigkeitsversorgungseinheit in Schnittdarstellung,
Figur 2 eine erfindungsgemäße Messvorrichtung in perspektivischer Ansicht,
Figur 3 in perspektivischer Darstellung das mittlere Flächenelement des Sensors mit Kammer für die Flüssigkeit,
Figur 4 in perspektivischer Ansicht die Innenseite des äußeren Flächenelementes, welches nicht Träger der Auswertelektronik ist und
Figur 5 in perspektivischer Darstellung die Innenseite des äußeren Flächenelementes, welches Träger der Auswerteelektronik ist.

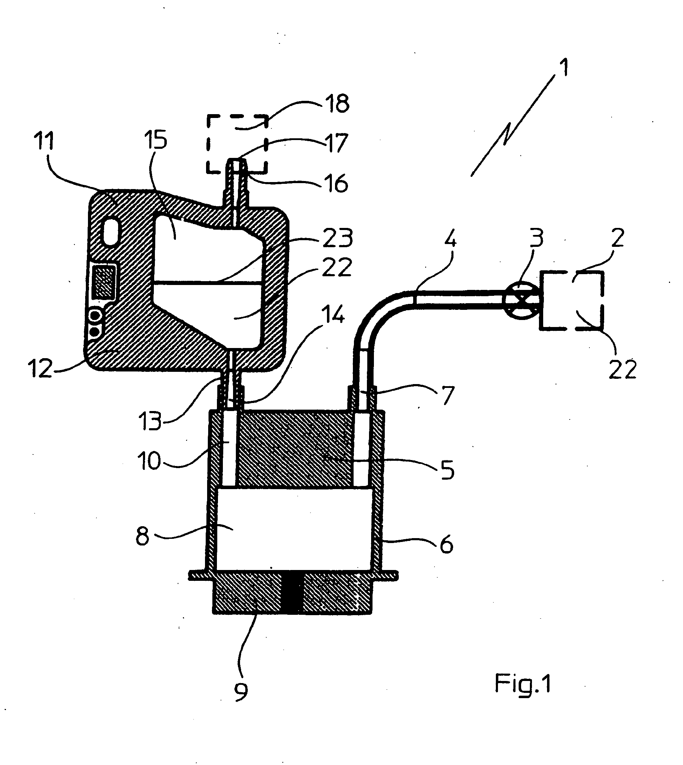

Fig.1 zeigt im Schnitt eine Flüssigkeitsversorgungseinheit 1 eines nicht dargestellten Tintendruckers zum Aufbringen von Flüssigkeit 22 auf ein Aufzeichnungsmaterial. Die Flüssigkeitsversorgungseinheit 1 umfasst einen Vorratsbehälter 2, der über eine Fluidvorrichtung 3 und optional über eine Flüssigkeitsleitung 4 mit einer Druckvorrichtung 5 verbunden ist. Die Druckvorrichtung 5 weist ein Gehäuse 6 mit einer Zulauföffnung 7 und einer Auslassöffnung 10 auf und umfasst ein Reservoir 8 mit einem darunter angeordneten Druckkopf 9. An die Auslassöffnung 10 ist eine Messvorrichtung 11 mit einem Zulaufflansch 13 angeschlossen, der über eine Einlassöffnung 14 zu einer innerhalb der Messvorrichtung 1 angeordneten Kammer 15 führt. Die Kammer 15 weist an ihrem Gehäuse auf der gegenüberliegend zu dem Zulaufflansch 13 angeordneten Seite einen Überlaufflansch 16 mit einer Überlauföffnung 17 auf. Hieran ist ein Ventil 18 angeschlossenen. Es dient insbesondere zum Schutz vor Verunreinigungen für eine in der Kammer 15 befindlichen Flüssigkeit bzw. Tinte.

Die Messvorrichtung 1 ist durch einen vorzugsweise mehrteiligen Sensor 12 ausgeführt, welcher gemäß der vorliegenden Ausführung als kapazitiver Sensor 12 ausgeführt ist und zumindest teilweise aus Leiterplattenmaterial besteht. Es aber auch der Einsatz aller anderen bekannten elektrischen Sensoren 12, bspw. induktive oder optelektrische Sensoren, möglich.

Die Messvorrichtung 1 dient zur Ermittlung des Flüssigkeitsstands in dem Reservoir 8 sowie zu seiner gezielten Steuerung. Hierfür ist die Messvorrichtung 1 mit der vorzugsweise als Pumpe ausgebildeten Fluidvorrichtung 3 steuerungsmäßig verbunden.

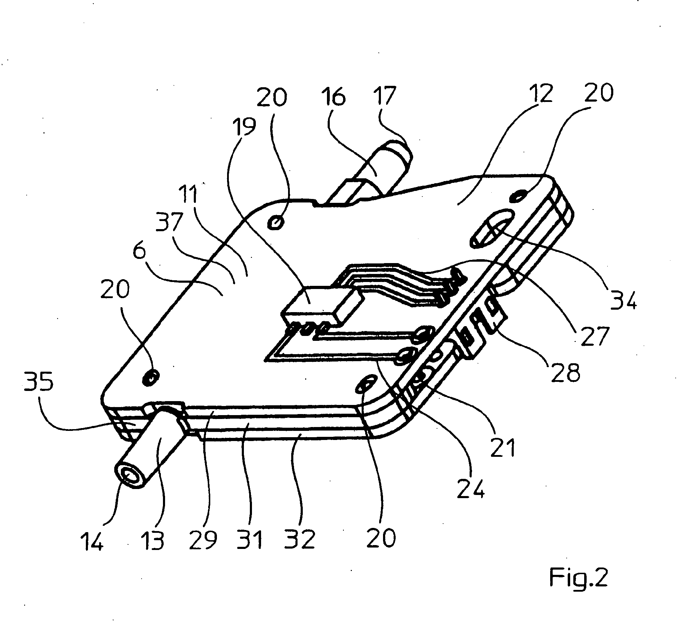

Wie der Fig. 2 zu entnehmen ist, ist auf einer Außenseite des Sensors 12 eine Auswerteelektronik 19 montiert. Sie ist zur Spannungsversorgung über Leiterbahnen 27 mit einem Anschlussstecker 28 und zur Signalverarbeitung über Leiterbahnen 24 mit Kontaktelementen 21 verbunden. An die Kontaktelemente 21 kann über eine nicht gezeigte Signalleitung eine Gerätesteuerung (nicht dargestellt) des Tintendruckers (nicht dargestellt) angeschlossen werden.

Die Aufgabe der in der Flüssigkeitsversorgungseinheit 1 angeordneten Messvorrichtung 11 besteht darin, das Vorhandensein von Flüssigkeit zu detektieren bzw. dafür zu sorgen, dass ein in der Druckvorrichtung 5 gebildetes Reservoir 8 immer mit Flüssigkeit 22 gefüllt ist. Um diese Aufgabe zu lösen, ist der Sensor 12 an der Auslassöffnung 10 der Druckvorrichtung 5 angeordnet und erfasst als Messgröße unterschiedliche Flüssigkeitsniveaus 23 in der außerhalb der Druckvorrichtung 5 in dem Sensor 12 gebildeten Kammer 15. Der Sensor 12 erzeugtzunächst Mess-Signale, welche zu der Auswertelektronik 19 übermittelt werden.

Sie verarbeitet die Mess-Signale und vergleicht ihre Werte mit wenigstens zwei in ihr hinterlegten Schwellwerten. Sie entsprechen einem minimalen und einem maximalen Füllstand in der Kammer 15.

Fällt bspw. das Flüssigkeitsniveau 23 in der Kammer 15, was eine Kapazitätsänderung zur Folge hat, unter den minimalen Füllstand, so erzeugt die Auswerteelektronik 19 ein Einschalt-Signal zur Einschaltung der Fluidvorrichtung 3. Die Einschaltung kann einerseits über eine direkte Verbindung zwischen der Fluidvorrichtung 3 und der Auswerteelektronik 19 realisiert werden. Andererseits kann das Einschalt-Signal zu eine mit der Auswerteelektronik 19 verbundenen Gerätesteuerung (nicht gezeigt) gesendet werden, welche dann die Fluidvorrichtung 3 einschaltet. Zum Ein- und auch Ausschalten der Fluidvorrichtung 3 sind Steuerleitungen zwischen der Gerätesteuerung und der Fluidvorrichtung bzw. zwischen der Auswerteelektronik 19 und der Fluidvorrichtung vorgesehen. Ein- und Ausschaltsignale könnten aber auch über Funk gesendet werden.

Die Fluidvorrichtung 3 fördert nach Empfang des EinschaltSignals aus dem Vorratsbehälter 2 Flüssigkeit 22 über die Flüssigkeitsleitung 4 und der Druckvorrichtung 5 in die Kammer 15 bis der maximale Füllstand überschritten wird. Die Auswerteelektronik 19 erkennt die Überschreitung des maximalen Füllstandes durch Vergleich der ihr zugeleiteten elektrische Mess-Signale mit dem Schwellwert für den maximalen Füllstand, wobei die elektrischen Mess-Signale im vorliegenden Fall sensierten Kapazitätsänderungen entsprechen.

Wird die Überschreitung des maximalen Füllstandes durch die Auswerteelektronik 19 erkannt, so sendet sie selbst ein Ausschalt-Signal zu der Fluidvorrichtung 3 und schaltet diese aus. Alternativ kann dies analog zum oben beschrieben Fall über eine mit der Auswerteelektronik 19 verbundenen Gerätesteuerung erfolgen.

Nach dem Ausschalten der Fluidvorrichtung 3 sinkt dass Flüssigkeitsniveau 23 bis der minimale Flüssigkeitsstand erreicht ist und die Fluidvorrichtung 3 durch eine Gerätesteuerung oder der Auswerteelektronik gemäß dem oben beschrieben Verfahren eingeschaltet wird.

In Fig.2 ist in perspektivischer Ansicht eine vorteilhafte Ausführung der erfindungsgemäßen Messvorrichtung 11 mit dem Sensor 12 in miniaturisierter Ausführung eines mehrteiligen Gehäuses 6 mit Verbindungs- bzw. Positionierelementen 20 dargestellt. Der Sensor 12 kann über einen Zulaufflansch 13 mit Einlassöffnung 14 an eine Auslassöffnung 10 der Druckvorrichtung 5 angeschlossen werden. Gegenüber der schmalen Gehäusekante des Zulaufflansches 13, auf gleicher Mittellinie gelegen, befindet sich an der schmalen Gehäusekante ein Überlaufflansch 16 mit einer Überlauföffnung 17. Hierauf ist ein Ventil 18 montiert. Des weiteren ist der Fig.2 zu entnehmen, das der Sensor 12 über mindestens eine Leiterbahn 24 und mindestens ein damit verbundenes Kontaktelement 21 verfügt, welches die elektrische Verbindung zu in der Kammer 15 angeordneten Flächenelektroden 30,33, sowie über elektrische Leiterbahnen 27 mit dem zugehörigen Anschlussstecker 28 herstellt. Dieser übernimmt die Spannungsversorgung der Auswerteelektronik 19. Alternativ kann die Spannungsversorgung auch über bspw. in unmittelbarer Nähe der Auswerteelektronik 19 vorgesehen Batterien erfolgen.

Die Auswerteelektronik 19 ist vorteilhafterweise als gedruckte Schaltung an der Außenfläche 37 des Gehäuses 6 des Sensors 12 angeordnet. Das Gehäuse 6 ist also zumindest teilweise durch ein Leitermaterial gebildet. Denkbar ist aber auch einen bspw. auf das Leitermaterial aufgelöteten Mikroprozessor als Auswerteelektronik 19 zu verwenden.

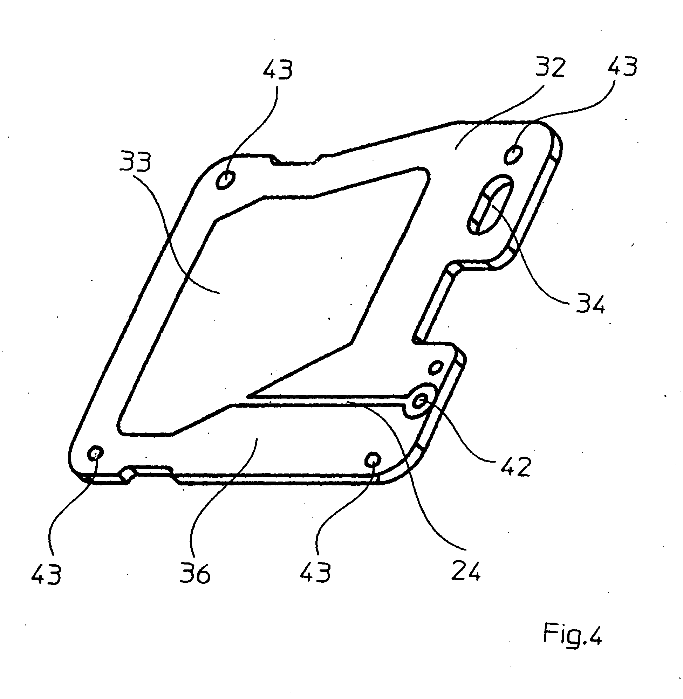

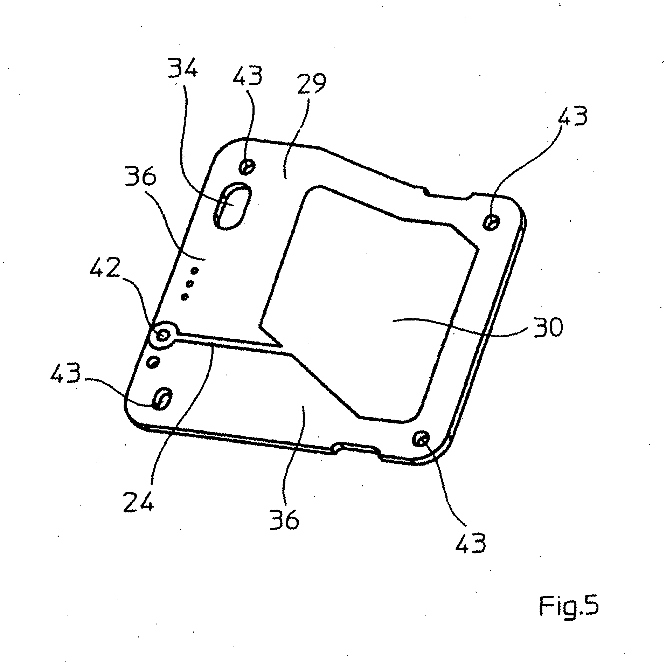

Das Gehäuse 6 des Sensors 12 ist erfindungsgemäß mehrteilig und im weiteren Sinn rechteckförmig ausgestaltet, wobei der Sensor 12 vorzugsweise aus drei flächigen Elementen 29, 31, 32 gebildet wird. Zwei der Elemente 29,32 bilden dabei die beiden äußeren großflächigen Gehäusehälften, während das Element 31 als mittlere Lage zwischen den beiden Elementen 29,32 angeordnet ist und mit den zwei Elementen 29,32 die umlaufende schmale Gehäusekante 35 bildet. Die zwei äußeren flächigen Elemente 29,32 (siehe Fig.4 und Fig.5) sind als Träger für die Elektroden 30,33 ausgestaltet. Die Elektroden 30,33 sind flächig ausgebildet und in einer Ausnehmung an der Innenfläche 36 der Elemente 29,32 angeordnet (siehe Fig.4 und Fig.5). Denkbar sind zur Befestigung der Elektroden 30,33 aber auch alle weiteren bekannten Anschlussmöglichkeiten für Metallflächen. Bspw. können die Elektroden 30,33 auf das Leitermaterial aufgedampft werden. Ferner sind nicht zwingend, wie in der vorliegenden Ausführung der Erfindung, zwei Elektroden 31,32 für ihre Funktion zur Sensierung von Füllstandsveränderung notwendig. Eine Elektrode 30,33 ist hierfür prinzipiell ausreichend.

Das flächige Element 29 ist zusätzlich Träger der Auswerteelektronik 19, wobei die Auswerteelektronik 19 an der zu der Flächenelektrode 30 abgewandten Außenfläche 37 des Elements 29 befestigt ist.

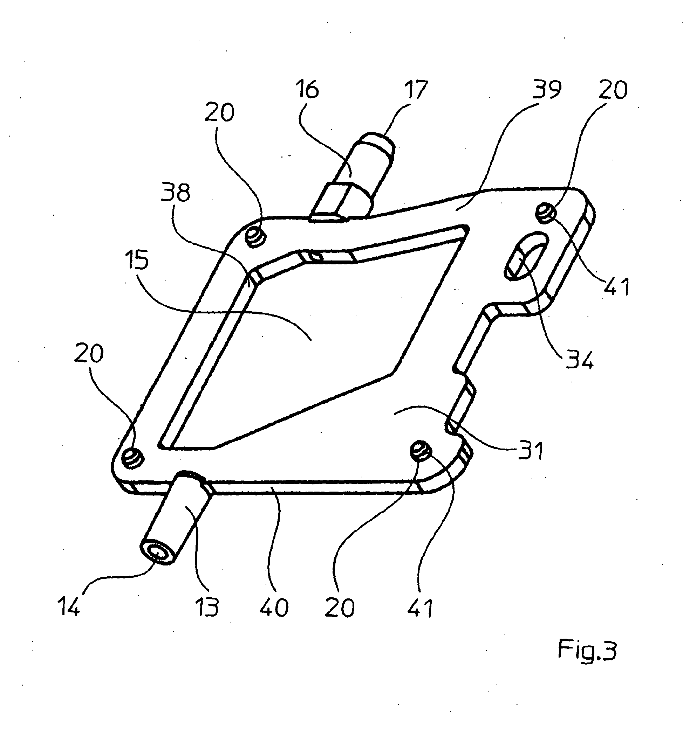

Des Weiteren ist das Gehäuse 6 der Messvorrichtung 11 mit einer Öffnung 34, vorzugsweise mit einem Langloch, versehen. Das Langloch 34 dient zur Aufnahme eines Befestigungselementes (nicht dargestellt), wodurch die Flüssigkeitsversorgungseinheit 1 in einer Druckvorrichtung oder einem Tintendrucker montiert werden kann. Zwischen den beiden äußeren Elementen 29,32 befindet sich in SandwichBauweise das Element 31, welches die Mittellage des Sensors einnimmt. Das mittlere Flächenelement 31 ist in perspektivischer Darstellung in Fig.3 aufgezeigt. Das Flächenelement 31 ist einteilig und aus Kunststoff in Spritzgießtechnik hergestellt. Das Flächenelement 31 ist mit einer die Kammer 15 bildenden Öffnung versehen. Sie dient zur Aufnahme von Flüssigkeit im Sensor 12, wobei die Seitenwände der Kammer 15 einerseits durch die Innenkontur 38 und andererseits durch die Elemente 29,32 gebildet werden. Die Kammer 15 ist hierdurch ein innerhalb des Sensors 12 gebildeter Messraum, in dem durch die beiden flächigen Elektroden 30,33 Seitenwände gebildet sind. Durch die Größe der Kammer 15 in dem Element 31 ergibt sich eine rahmenartige Kontur 39, an dessen Außenkontur 40 die gegenüberliegenden Flansche 13,16 mit den Öffnungen 14,17 zum Zugang zu der Kammer 15 angeordnet sind, wobei der Flansch 13 zum Anschluss an die Druckvorrichtung 5 und der Flansch 16 zum Anschluss des Ventils 18 dienen. Des Weiteren sind an dem Flächenelement 31 als Verbindungs- bzw. Positionierelemente 20 Zapfen 41 angeordnet, wobei auch andere Verbindungselemente 20 denkbar sind. Die Zapfen 41 befinden sich beiderseits des Rahmens 39 und dienen der Befestigung der Flächenelemente 29,31,32. Bei der Montage der Elemente 29,31,32 stellen die Zapfen 41 die feste Verbindung der Elemente 29,31,32 untereinander sicher, wobei die Montage durch Zusammenfügen der Elemente 29,31,32 erfolgt. Das Zusammenfügen der Elemente 29,31,32 kann auch durch die Verbindungstechnik des Klebens erfolgen, wobei auch die Kombination des Zusammenfügens der Elemente 29,31,32 durch Kleben und Pressen möglicht ist. Darüber hinaus können die Elemente 29,31,32, ggf. auch ohne mechanische Befestigungselemente verschweißt werden. Dabei sollte jedoch wenigstens eine Positionierhilfe vorgesehen sein.

Fig.4 zeigt in perspektivischer Ansicht das Flächenelement 32, welches ein äußeres Element des Gehäuses 6 von dem Sensor 12 bildet. Das Flächenelement 32 umfasst eine Innenfläche 36, auf der die Elektrode 33 mit der Leiterbahn 24 und einer Bohrung 42 angeordnet ist, die zur Aufnahme des Kontaktelements 21 dient. Die Bohrung 42 kann wahlweise mit oder ohne Durchkontaktierung hergestellt sein. Ist keine Durchkontaktierung der Bohrung 42 vorgesehen, erfolgt die Kontaktierung der Leiterbahnen 24 auf dem Element 29 und dem Element 32 mit einem Kontaktniet oder einer Kontakthülse (nicht dargestellt). Das Kontaktelement 21 stellt die elektrische Verbindung mit der an der Außenfläche 37 des Flächenelements 29 angeordneten Auswerteelektronik 19 her. Das Flächenelement 32 besteht erfindungsgemäß aus Leiterplattenmaterial, wodurch der Sensor 12 kostengünstig in Leiterplattentechnik mit einseitiger- oder zweiseitiger Kaschierung hergestellt werden kann. Das Flächenelement 32 besteht vorzugsweise aus Leiterplattenmaterial mit einseitiger Kaschierung für die auf der Innenfläche 36 liegende Flächenelektrode 33 mit zugehöriger Leiterbahn 24.

Das Flächenelement 32 enthält, wie das Element 31 der Zwischenlage, einen Durchbruch der als Langloch 34 ausgebildet ist. Des Weiteren sind relativ kleine Öffnungen, vorzugsweise Bohrungen 43, zur Aufnahme der Verbindungs- bzw. Positionierelemente 20 des Flächenelements 31 vorgesehen.

Das Flächenelement 29 aus der perspektivischen Darstellung der Fig.5 stellt ebenfalls ein äußeres Element 29 des Gehäuses 6 des Sensors 12 dar. Auch hier ist die Innenfläche 36 des Elements 29 mit der darauf abgebildeten Flächenelektrode 30 mit zugehöriger Leiterbahn 24 und der wahlweise mit oder ohne durchkontaktierten Bohrung 42 zur Aufnahme eines Kontaktelements 21, welches die elektrische Verbindung zur Auswerteelektronik 19 herstellt, aufgezeigt. Das Flächenelement 29 besteht ebenfalls im Wesentlichen aus Leiterplattenmaterial und ist zweiseitig kaschiert. Das Flächenelement 29 ist somit Träger der an der Innenfläche 36 liegenden Elektrode 30 und Träger der an der Außenfläche 37 befindlichen Auswerteelektronik 19.

Das Flächenelement 29 enthält, wie das Element 31 der Zwischenlage, einen Durchbruch der als Langloch 34 ausgebildet ist. Des Weiteren sind relativ kleine Öffnungen, vorzugsweise Bohrungen 43, die der Aufnahme der Verbindungs- bzw. Positionierelemente 20 des Flächenelements 31 zum Zusammenfügen der Gehäuseteile dienen, vorhanden.

### Bezugszeichenliste

- 1: Flüssigkeitsversorgungseinheit
- 2: Vorratsbehälter
- 3: Fluidvorrichtung
- 4: Flüssigkeitsleitung
- 5: Druckvorrichtung
- 6: Gehäuse
- 7: Zulauföffnung
- 8: Reservoir
- 9: Druckkopf
- 10: Auslassöffnung
- 11: Messvorrichtung
- 12: Sensor
- 13: Zulaufflansch
- 14: Einlassöffnung
- 15: Kammer
- 16: Überlaufflansch
- 17: Überlauföffnung
- 18: Ventil
- 19: Auswerteelektronik
- 20: Verbindungselement
- 21: Kontaktelemente
- 22: Flüssigkeit
- 23: Flüssigkeitsniveau
- 24: Leiterbahnen
- 25: Frei
- 26: Frei
- 27: Leiterbahnen
- 28: Anschlussstecker
- 29: Flächenelement
- 30: Elektrode
- 31: Flächenelement
- 32: Flächenelement
- 33: Elektrode
- 34: Öffnung
- 35: Gehäusekante
- 36: Innenfläche
- 37: Außenfläche
- 38: Innenkontur
- 39: Rahmen
- 40: Außenkontur
- 41: Zapfen
- 42: Bohrung
- 43: Bohrungen

## Patentansprüche

1. Verfahren für eine Druckmaschine mit Druckvorrichtung (5) zum Aufbringen von Flüssigkeit (22) auf ein Aufzeichnungsmaterial, mit Überwachung der Flüssigkeitsmenge in einer Flüssigkeitsversorgungseinheit (1) durch Messen des Flüssigkeitsstandes (23) mit Folgesteuerung, **gekennzeichnet durch**
Bereitstellen der Druckvorrichtung (5) mit einem Gehäuse (6), welches eine Zulauföffnung (7) für die Flüssigkeit (22) und eine Auslassöffnung (8) für die Flüssigkeit aufweist und ein Reservoir (8) für die Flüssigkeit (22) und einen Druckkopf (9) umfasst,
Anschließen eines Vorratsbehälters (2) für die Flüssigkeit an der Zulauföffnung (7) und einer Messvorrichtung (11) mit einer Kammer (15) an der Auslassöffnung (10) und
Messen des Flüssigkeitsstandes (23) **durch** die Messvorrichtung (11), die das Vorhandensein von Flüssigkeit am Ausgang der Druckvorrichtung (5) detektiert, indem ein Flüssigkeitsniveau (23) in der Kammer (15) der Messvorrichtung (11) erfasst wird.

2. Verfahren für eine Druckmaschine nach Anspruch 1,
**dadurch gekennzeichnet, dass**
die Detektion der Flüssigkeit (22) durch ein kapazitives Messverfahren erfolgt.

3. Verfahren für eine Druckmaschine nach Anspruch 2
, **dadurch gekennzeichnet, dass**
das kapazitive Verfahren die produktionstechnische Größe des Füllstandes (23), welche auf einer Änderung des elektrischen Feldes beruht, erfasst und in eine entsprechend dieser Änderung weiterverarbeitbare Bedingung wandelt.

4. Verfahren für eine Druckmaschine nach Anspruch 1,
**dadurch gekennzeichnet, dass**
eine Gerätesteuerung eine Fluidvorrichtung (3) an - oder ausschaltet.

5. Flüssigkeitsversorgungseinheit (1) für eine Druckmaschine mit Vorratsbehälter und mit Druckvorrichtung (5) zum Aufbringen von Flüssigkeit (22) auf ein Aufzeichnungsmaterial, mit Überwachung der Flüssigkeitsmenge in einer Flüssigkeitsversorgungseinheit (1) durch Messen des Flüssigkeitsstandes (23) mit Folgesteuerung, **dadurch gekennzeichnet, dass**
die Druckvorrichtung (5) ein Gehäuse (6) mit einer Zulauföffnung (7) für die Flüssigkeit (22) und einer Auslassöffnung (10) für die Flüssigkeit (22) aufweist und ein Reservoir (8) und einen Druckkopf (9) umfasst und
der Vorratsbehälter (2) mit der Zulauföffnung (7) verbunden ist und
eine Messvorrichtung (11) mit einer Kammer (15), die mit der Auslassöffnung (10) verbunden ist und
die Messvorrichtung (11) zum Messen eines Füllstandes (23) in der Kammer (23) und zum Steuern einer Fluidvorrichtung (3) geeignet ist.

6. Flüssigkeitsversorgungseinheit (1) nach Anspruch 5,
**dadurch gekennzeichnet, dass**
die Messvorrichtung (11) einen Sensor (12) und eine damit verbundene Auswerteelektronik (19) umfasst.

7. Flüssigkeitsversorgungseinheit (1) nach Anspruch 6,
**dadurch gekennzeichnet, dass**
der Sensor (12) an einer Auslassöffnung (10) der Druckvorrichtung (5) angeordnet ist.

8. Flüssigkeitsversorgungseinheit (1) nach Anspruch 7,
**dadurch gekennzeichnet, dass**
der Sensor (12) eine strömungsmäßig mit der Auslassöffnung (10) verbundene Kammer (15) aufweist.

9. Flüssigkeitsversorgungseinheit (1) nach mindestens einem der Ansprüche 6 bis 8, **dadurch gekennzeichnet, dass** der Sensor (12) als Messgröße unterschiedliche Flüssigkeitsniveaus (23) in der außerhalb der Druckervorrichtung (5) in dem Sensor gebildeten Kammer (15) erfasst.

10. Flüssigkeitsversorgungseinheit (1) nach mindestens einem der Ansprüche 6 bis 9, **dadurch gekennzeichnet, dass**
der Sensor (12) mehrere flächige Elemente (29,31,32) enthält, die in Art eines Sandwichs aufeinanderliegen, wobei das mittlere Element (31) durch einen ausgenommenen Bereich eine Kammer (15) bildet und zumindest ein Teil der Messvorrichtung (11) aus Leiterplattenmaterial besteht.

11. Flüssigkeitsversorgungseinheit (1) nach Anspruch 10,
**dadurch gekennzeichnet, dass**
der Sensor (12) einen Zulaufflansch (13) mit einer Einlassöffnung (14) und eine damit verbundene Kammer (15) aufweist.

12. Flüssigkeitsversorgungseinheit (1) nach Anspruch 10,
**dadurch gekennzeichnet, dass**
der Sensor (12) einen mit der Kammer (15) verbundenen Überlaufflansch (16) mit einer Überlauföffnung (17) enthält.

13. Flüssigkeitsversorgungseinheit (1) nach Anspruch 10,
**dadurch gekennzeichnet, dass**
wenigstens ein Element (29,31,32) als Träger für eine Elektrode (30,33) ausgebildet ist.

14. Flüssigkeitsversorgungseinheit (1) nach Anspruch 13
, **dadurch gekennzeichnet, dass**
die Elektrode (30,33) zumindest einen Teil einer Innenwand von der Kammer (15) bildet.

15. Flüssigkeitsversorgungseinheit (1) nach mindestens einem der Ansprüche 6 bis 14, **dadurch gekennzeichnet, dass** der Sensor (12) als kapazitiver oder induktiver oder optoelektrischer Sensor (12) ausgebildet ist.

## Claims

1. Method for a printing machine having a printing device (5) for applying liquid (22) to a recording material whilst monitoring the amount of liquid in a liquid supplying unit (1) by measuring the liquid level (23) using a sequencing control unit, **characterised by**
providing the printing device (5) with a housing (6) which comprises an inlet opening (7) for the liquid (22) and an outlet opening (8) for the liquid and includes a reservoir (8) for the liquid (22) and a printing head (9),
connecting a storage container (2) for the liquid to the inlet opening (7) and a measuring device (11) having a chamber (15) to the outlet opening (10), and measuring the liquid level (23) by the measuring device (11) which detects the presence of liquid at the output of the printing device (5), in that a liquid level (23) is detected in the chamber (15) of the measuring device (11).

2. Method for a printing machine as claimed in Claim 1, **characterised in that** the liquid (22) is detected by way of a capacitive measuring method.

3. Method for a printing machine as claimed in Claim 2, **characterised in that** the capacitive method detects the production-related parameter of the filling level (23), which is based on a change in the electrical field, and converts this into a condition which can be further processed according to this change.

4. Method for a printing machine as claimed in Claim 1, **characterised in that** a device controller switches a fluid device (3) on or off.

5. Liquid supplying unit (1) for a printing machine having a storage container and a printing device (5) for applying liquid (22) to a recording material whilst monitoring the amount of liquid in a liquid supplying unit (1) by measuring the liquid level (23) using a sequencing control unit, **characterised in that** the printing device (5) comprises a housing (6) having an inlet opening (7) for the liquid (22) and an outlet opening (10) for the liquid (22) and includes a reservoir (8) and a printing head (9), and
the storage container (2) is connected to the inlet opening (7), and
a measuring device (11) having a chamber (15) which is connected to the outlet opening (10), and
the measuring device (11) is suitable for measuring a filling level (23) in the chamber (23) and for controlling a fluid device (3).

6. Liquid supplying unit (1) as claimed in Claim 5, **characterised in that**
the measuring device (11) includes a sensor (12) and evaluation electronics (19) connected thereto.

7. Liquid supplying unit (1) as claimed in Claim 6, **characterised in that** the sensor (12) is disposed on an outlet opening (10) of the printing device (5).

8. Liquid supplying unit (1) as claimed in Claim 7, **characterised in that**
the sensor (12) comprises a chamber (15) which is connected in terms of flow to the outlet opening (10).

9. Liquid supplying unit (1) as claimed in at least one of Claims 6 to 8, **characterised in that**
the sensor (12) detects different liquid levels (23) in the chamber (15) formed outside the printing device (5) in the sensor as a measuring parameter.

10. Liquid supplying unit (1) as claimed in at least one of Claims 6 to 9, **characterised in that**
the sensor (12) contains several two-dimensional elements (29, 31, 32) which lie on top of each other in a sandwich-like manner, wherein the middle element (31) forms a chamber (15) by way of a cut-out region, and at least part of the measuring device (11) consists of printed circuit board material.

11. Liquid supplying unit (1) as claimed in Claim 10, **characterised in that**
the sensor (12) comprises an inlet flange (13) having an inlet opening (14) and a chamber (15) connected thereto.

12. Liquid supplying unit (1) as claimed in Claim 10, **characterised in that**
the sensor (12) contains an overflow flange (16), connected to the chamber (15), having an overflow opening (17).

13. Liquid supplying unit (1) as claimed in Claim 10, **characterised in that** at least one element (29, 31, 32) is formed as a support for an electrode (30, 33).

14. Liquid supplying unit (1) as claimed in Claim 13, **characterised in that** the electrode (30, 33) forms at least part of an inner wall of the chamber (15).

15. Liquid supplying unit (1) as claimed in at least one of Claims 6 to 14,
**characterised in that**
the sensor (12) is formed as a capacitive or inductive or optoelectric sensor (12).

## Revendications

1. Procédé pour une machine à imprimer avec dispositif d'impression (5) pour l'application de liquide (22) sur un matériau d'enregistrement, avec contrôle de la quantité de liquide dans une unité d'alimentation en liquide (1) par mesure du niveau de liquide (23) avec commande séquentielle,
**caractérisé par**
mise à disposition du dispositif d'impression (5) avec un boîtier (6), qui présente une ouverture d'entrée (7) pour le liquide (22) et une ouverture de sortie (8) pour le liquide et comporte un réservoir (8) pour le liquide (22) et une tête d'impression (9),
raccordement d'un récipient de réserve (2) pour le liquide sur l'ouverture d'entrée (7) et d'un dispositif de mesure (11) avec une chambre (15) sur l'ouverture de sortie (10) et
mesure du niveau de liquide (23) par le dispositif de mesure (11), qui détecte la présence de liquide à la sortie du dispositif d'impression (5) en enregistrant un niveau de liquide (23) dans la chambre (15) du dispositif de mesure (11).

2. Procédé pour une machine à imprimer selon la revendication 1,
**caractérisé en ce que**
le détection du liquide (22) s'effectue par un procédé de mesure capacitif.

3. Procédé pour une machine à imprimer selon la revendication 2,
**caractérisé en ce que**
le procédé capacitif enregistre la grandeur technique de production du niveau de remplissage (23), qui repose sur une variation du champ électrique, et la convertit en une condition qui peut être retraitée en fonction de cette variation.

4. Procédé pour une machine à imprimer selon la revendication 1,
**caractérisé en ce que**
une commande d'appareil active ou désactive un dispositif de fluide (3).

5. Unité d'alimentation en liquide (1) pour une machine à imprimer avec récipient de réserve et avec dispositif d'impression (5) pour l'application de liquide (22) sur un matériau d'enregistrement, contrôle de la quantité de liquide dans une unité d'alimentation en liquide (1) par mesure du niveau de liquide (23) avec commande séquentielle, **caractérisée en ce que**
le dispositif d'impression (5) présente un boîtier (6) avec une ouverture d'entrée (7) pour le liquide (22) et une ouverture de sortie (10) pour le liquide (22) et comporte un réservoir (8) et une tête d'impression (9) et
le récipient de réserve (2) est relié à l'ouverture d'entrée (7) et
un dispositif de mesure (11) est relié à une chambre (15), qui est reliée à l'ouverture de sortie (10) et
le dispositif de mesure (11) est approprié pour mesurer un niveau de remplissage (23) dans la chambre (23) et pour commander un dispositif de fluide (3).

6. Unité d'alimentation en liquide (1) selon la revendication 5, **caractérisée en ce que**
le dispositif de mesure (11) comporte un capteur (12) et une électronique d'analyse (19) reliée à ce capteur.

7. Unité d'alimentation en liquide (1) selon la revendication 6, **caractérisée en ce que**
le capteur (12) est disposé sur une ouverture de sortie (10) du dispositif d'impression (5).

8. Unité d'alimentation en liquide (1) selon la revendication 7, **caractérisée en ce que**
le capteur (12) présente une chambre (15) reliée au niveau de l'écoulement à l'ouverture de sortie (10).

9. Unité d'alimentation en liquide (1) selon au moins l'une quelconque des revendications 6 à 8,
**caractérisée en ce que**
le capteur (12) enregistre comme grandeur de mesure différents niveaux de liquide (23) dans la chambre (15) formée à l'extérieur du dispositif d'impression (5) dans le capteur.

10. Unité d'alimentation en liquide (1) selon au
moins l'une quelconque des revendications 6 à 9,
**caractérisée en ce que**
le capteur (12) contient plusieurs éléments (29, 31, 32) plans qui sont posés les uns sur les autres à la façon d'un sandwich, l'élément (31) central formant une chambre (15) à travers une zone évidée et au moins une partie du dispositif de mesure (11) étant à base de matériau de carte imprimée.

11. Unité d'alimentation en liquide (1) selon la revendication 10, **caractérisée en ce que**
le capteur (12) présente une bride d'entrée (13) avec une ouverture d'admission (14) et une chambre (15) reliée à celle-ci.

12. Unité d'alimentation en liquide (1) selon la revendication 10, **caractérisée en ce que**
le capteur (12) contient une bride de trop-plein (16) reliée à la chambre (15) et dotée d'une ouverture de trop-plein (17).

13. Unité d'alimentation en liquide (1) selon la revendication 10, **caractérisée en ce que**
au moins un élément (29, 31, 32) est conçu comme support pour une électrode (30, 33).

14. Unité d'alimentation en liquide (1) selon la revendication 13, **caractérisée en ce que**
l'électrode (30, 33) forme au moins une partie d'une paroi intérieure de la chambre (15).

15. Unité d'alimentation en liquide (1) selon au
moins l'une quelconque des revendications 6 à 14,
**caractérisée en ce que**
le capteur (12) est conçu comme capteur (12) capacitif ou inductif ou optoélectrique.
